# EUROPÄISCHE PATENTSCHRIFT

(11) **EP 1 377 486 B1**
(45) Veröffentlichungstag und Bekanntmachung des Hinweises auf die Patenterteilung: **27.07.2005**
(21) Anmeldenummer: 01995614.3
(22) Anmeldetag: 15.12.2001
(51) Int. Cl.: B60R 21/01

(54) **VORRICHTUNG ZUR INSASSENWARNUNG IN EINEM FAHRZEUG**
OCCUPANT WARNING DEVICE IN A VEHICLE
DISPOSITIF POUR AVERTIR LES OCCUPANTS D'UN VEHICULE

(30) Priorität: 31.03.2001 DE 10116190
(43) Veröffentlichungstag der Anmeldung: 07.01.2004
(73) Patentinhaber: ROBERT BOSCH GMBH, 70442 Stuttgart (DE)
(72) Erfinder: MATTES, Bernhard, 74343 Sachsenheim (DE); GOSLOWSKY, Hans, 81373 München (DE)
(86) Internationale Anmeldenummer: PCT/DE2001/004749
(87) Internationale Veröffentlichungsnummer: WO 2002/079005

(56) Entgegenhaltungen:
- EP-A- 0 473 324
- WO-A-01/08930
- DE-A- 4 341 500
- DE-A- 19 900 395
- DE-C- 4 406 897
- US-A- 5 366 241

## Beschreibung

### Stand der Technik

Die Erfindung geht aus von einer Vorrichtung zur Insassenwarnung in einem Fahrzeug nach der Gattung des unabhängigen Patentanspruchs 1. Eine solche Vorrichtung ist z.B. aus der WO 01/08930 bekannt.

Es ist bekannt, zur Erkennung der Position des Fahrzeuginsassen eine Fahrzeuginnenraumsensierung zu verwenden. Es gibt intelligente und passive Innenraumsensierungskonzepte, die als Sensorsysteme ausgebildet sind. Dazu gehören Ultraschallsensoren, Aktivinfrarotsensoren, Innenraumkameras, insbesondere Stereo-Video- oder Stereo-CCD-Kameras, Radarsensoren und dabei insbesondere SAR-Radarkonzepte (Synthetic Aperture Radar), Absolutgewichtssensoren, beispielsweise auf Dehnmeßstreifen beruhend, Insassenklassifizierungssensoren, beispielsweise Sitzmatten, Sitzpositions-, Kopfstützenpositions-, Lehnenneigungs-, Gurtbenutzungs-, Gurtkraft-, Kindersitzerkennungssensoren oder auch Kombinationen aus solchen Sensorkonzepten. Diese Information wird dann zur Auslösung von Rückhaltesystemen verwendet.

### Vorteile der Erfindung

Erfindungsgemäß ist eine Vorrichtung zur Insassenwarnung in einem Fahrzeug mit den Merkmalen des unabhängigen Patentanspruchs 1 vorgesehen. Ein Fahrzeuginsasse wird gewarnt, sofern er sich in einer verletzungsgefährlichen Insassenposition, das sind insbesondere sogenannte Out-of-Position-Situationen, befindet. Diese Out-of-Position (OOP) Situationen zeigen an, dass sich ein Insasse zu nahe an einem Airbag oder zu ungünstig zum Airbag befindet, und bei einer Auslösung des Airbags diese Person gegebenenfalls verletzt oder kein optimaler Schutz ermöglicht werden würde. Erfindungsgemäß zeigt nun die Vorrichtung an , auf welchem Sitz sich der Insasse befindet, der eine verletzungsgefährdende Position eingenommen hat , so dass ein Fahrzeughersteller es damit dem Insassen ermöglicht, eine Position einzunehmen, die einen optimalen Schutz auch bei einem Unfall für den Insassen bietet.

Durch die in den abhängigen Ansprüchen aufgeführten Maßnahmen und Weiterbildungen sind vorteilhafte Verbesserungen der im unabhängigen Patentanspruch angegebenen Vorrichtung zur Insassenwarnung in einem Fahrzeug möglich.

Besonders vorteilhaft ist, dass die Warneinrichtung eine Anzeige und/oder einen Lautsprecher und/oder haptische Mittel zur Ausgabe der Warnung aufweist. Damit werden einem Insassen über unterschiedliche Kanäle in Gefahrensituationen Warnungen ausgegeben. Schläft beispielsweise ein Insasse, dann kann er eine optische Warnung nicht aufnehmen. Daher ist dann eine akustische und/oder eine haptische Warnung von Vorteil. Erfindungsgemäß ist es damit möglich, dass auch Kombinationen von diesen unterschiedlichen Warnmitteln möglich sind. Darüber hinaus ist es vorgesehen, dass eine Warnung für jeden Fahrzeuginsassen vorgesehen ist. Die haptische Warnung kann insbesondere über Sitz- oder Lenkradvibrationen beziehungsweise Sitzpolsteroberflächenbewegungen realisiert werden.

Darüber hinaus ist es von Vorteil, dass die Warneinrichtung erst eine Warnung ausgibt, wenn ein Insasse sich für eine vorgegebene Zeit in der Out-of-Position-Position befindet. Damit wird sichergestellt, dass durch ein zufälliges und kurzzeitiges Bewegen der Person in die Out-of-Position-Situation keine Warnung ausgegeben wird. Dies vermeidet, dass sich Insassen durch unnötige Warnungen überflüssigerweise gestört fühlen und damit zukünftige Warnungen möglicherweise ignorieren.

Schließlich ist es auch von Vorteil, dass ein Prozessor vorhanden ist, der mit der Innenraumsensierung verbunden ist, um die Signale der Innenraumsensierung auszuwerten und die Warneinrichtung in Abhängigkeit von der Auswertung anzusteuern.

### Zeichnung

Ausführungsbeispiele der Erfindung sind in der Zeichnung dargestellt und in der nachfolgenden Beschreibung näher erläutert. Figur 1 zeigt eine Out-of-Position-Situation, Figur 2 ein Blockschaltbild der erfindungsgemäßen Vorrichtung und Figur 3 ein Flußdiagramm des erfindungsgemäßen Verfahrens.

### Beschreibung

Insbesondere in den USA, aber auch in anderen Ländern ist es Ziel einer Gesetzgebung, Verletzungen oder gar Todesfälle durch Rückhaltemittel wie Airbags zu vermeiden. Solche Verletzungen treten insbesondere dann auf, wenn sich ein Fahrzeuginsasse in einer sogenannten Out-of-Position (OOP) befindet. Dann ist der Fahrzeuginsasse zu nahe am Airbag, denn bei einem Auslösen des Airbags ist das Verletzungsrisiko für den Fahrzeuginsassen dann sehr hoch. Erfindungsgemäß wird nun mit einer Warneinrichtung dem Fahrzeuginsassen angezeigt, wenn er sich in einer Out-of-Position befindet. Dies kann auch dahingehend erweitert werden, dass auch andere Positionen, die auch die Wahrscheinlichkeit einer Verletzung, beispielsweise weil die Sitzposition bei einem Unfall keinen optimalen Schutz durch einen Airbag ermöglicht, erhöhen, zu einer Warnung führen.

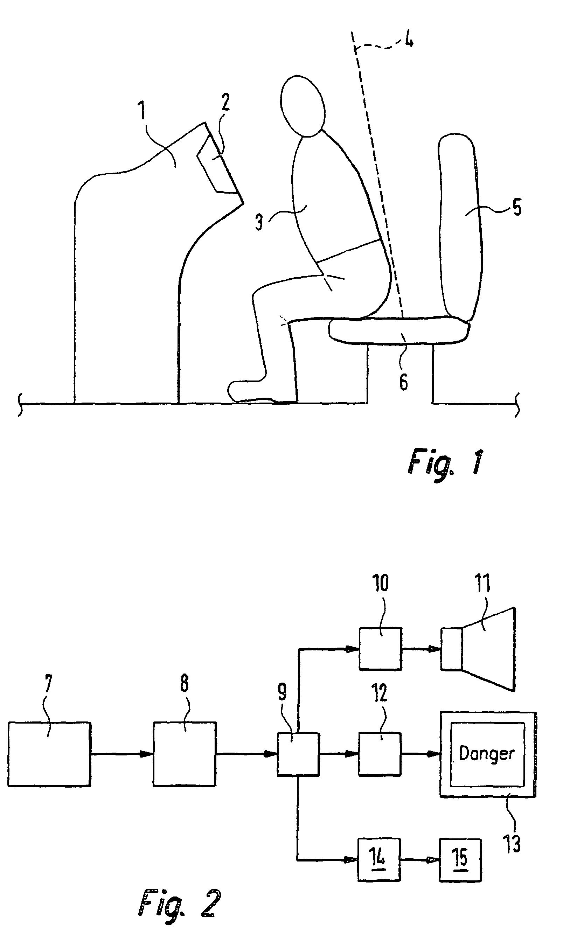

Figur 1 zeigt nun schematisch einen Fahrzeuginsassen, der sich in einer OOP befindet. Ein Armaturenbrett 1 weist einen Airbag 2 auf, der einen Fahrzeuginsassen 3 schützen soll. Der Fahrzeuginsasse 3 sitzt auf einem Fahrzeugsitz 6 mit einer Rücklehne 5. Der Fahrzeuginsasse 3 sitzt nun so weit vorne, dass er sich in der sogenannten Out-of-Position befindet. Diese Zone wird erreicht, wenn sich der Oberkörper links von der gestrichelten Grenze 4 befindet. Die Person 3 ist nun zu nahe am Airbag 2, so dass bei einem Auslösen des Airbags 2 die Gefahr besteht, mit verletzungsgefährdender Wucht durch den Airbag getroffen zu werden.

In Figur 2 ist ein Blockschaltbild der erfindungsgemäßen Vorrichtung dargestellt. Eine Fahrzeuginnenraumsensierung 7 ist an einen Dateneingang eines Prozessors 8 angeschlossen. Ein Datenausgang des Prozessors 8 führt zu einer Signalverarbeitung 9 einer Warneinrichtung. Ein erster Datenausgang der Signalverarbeitung 9 führt zu einem Audioverstärker 10, der an einen Lautsprecher 11 angeschlossen ist. Ein zweiter Datenausgang der Signalverarbeitung 9 führt zu einer Ansteuerung 12, die eine Anzeige 13 ansteuert. Ein dritter Datenausgang der Signalverarbeitung 9 führt zu einer Ansteuerung 14, die eine Lenkradvibration 15 ansteuert. Es ist alternativ möglich, dass nur ein oder zwei der hier dargestellten drei Warneinrichtungen, Lautsprecheranzeige und Lenkradvibration, verwendet werden. Darüber hinaus ist es möglich, dass auch eine Sitzvibration durch die Ansteuerung 14 angesteuert werden kann.

Die Innenraumsensierung 7 erkennt die Sitzposition des Fahrzeuginsassen. Dabei wird auch überhaupt erkannt, ob sich ein Fahrzeuginsasse auf dem beobachteten Sitz befindet. Als Fahrzeuginnenraumsensierung können Ultraschallsensoren, Aktivinfrarotsensoren, Innenraumkameras, Radarsensoren, Absolutgewichtsensoren, Sitzmatten, Sitzpositionssensoren, Kopfstützenpositionssensoren, Lehnenneigungssensoren, Gurtbenutzungssensoren, Gurtkraftsensoren, Kindersitzerkennungssensoren und Kombinationen daraus verwendet werden. Durch die Signale dieser Innenraumsensierungskonzepte wird bei einem Crash die Aktivierung der Rückhaltemittel situationsangepaßt gesteuert. Die Fahrzeuginnenraumsensierung überträgt nun die Sitzposition dem Prozessor 8. Der Prozessor 8 wertet aus, ob die von der Innenraumsensierung 7 ermittelte Sitzposition des Fahrzeuginsassen bedeutet, dass sich der Fahrzeuginsasse in einer verletzungsgefährdenden Position befindet. Dies erkennt der Prozessor 8, indem er die ermittelte Sitzposition des Fahrzeuginsassen mit der vorgegebenen Grenze 4 vergleicht. Befindet sich nun der Oberkörper des Fahrzeuginsassen 3 zwischen der Grenze 4 und dem Armaturenbrett 1, dann liegt eine Out-of-Position vor. Hat der Prozessor 8 eine solche Position erkannt, dann ist eine Warnung an den Fahrzeuginsassen 3 notwendig. Dann überträgt der Prozessor 8 eine entsprechende Ansteuerung an die Signalverarbeitung 9, um eine Warnung an den Fahrzeuginsassen auszulösen.

Die Signalverarbeitung 9 steuert dann über den Audioverstärker 10, den Lautsprecher 11, die Ansteuerung 12, die Anzeige 13 und die Ansteuerung 14 die Lenkradvibration 15 an. Dabei werden über den Lautsprecher 11 vorgegebene Warnungen ausgegeben. Auch auf der Anzeige 13, wie hier mit dem englischen Wort Danger dargestellt, wird ein vorgegebener Text angezeigt. Die Lenkradvibration 15 dagegen gibt ein Vibrationssignal ab. Die Lenkradvibration 15 ist natürlich nur für einen Fahrer geeignet. Für einen Mitfahrer ist dann eine Fahrzeugsitzoberflächenvibration das geeignete Mittel. Es kann jedoch auch vorgesehen sein, dass über die Lenkradvibration 15 der Fahrer gewarnt wird, dass wenigstens einer seiner Mitfahrer sich in einer verletzungsgefährdenden Sitzposition befindet.

Über die Anzeige 13 kann auch angezeigt werden, auf welchem Sitz sich die Person befindet, die in einer gefährdenden Position sich aufhält. Über den Lautsprecher 15 ist es schließlich möglich, den jeweiligen Fahrzeugsitz anzusagen, auf dem sich der Fahrzeuginsasse befindet, der eine verletzungsgefährdende Position eingenommen hat.

Es ist möglich, dass in einem Fahrzeug mehrere Anzeigen, idealerweise für jeden Mitfahrer vorhanden sind.

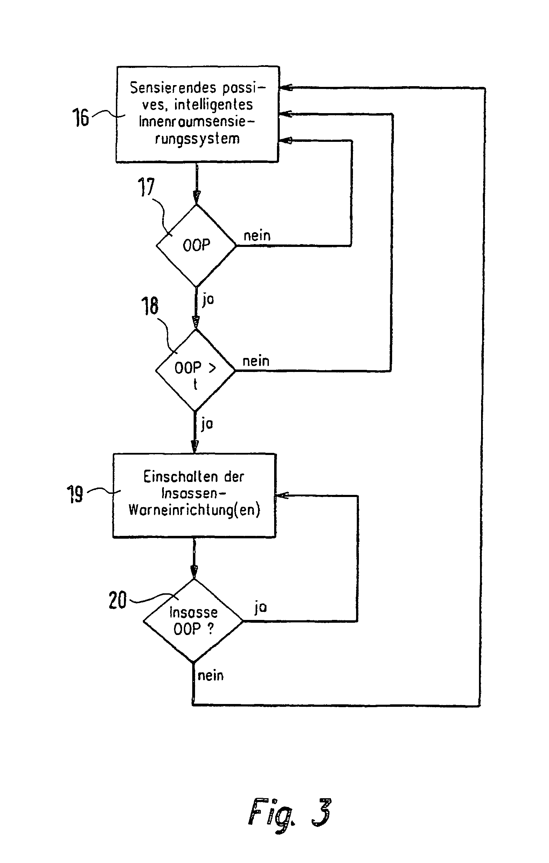

In Figur 3 ist ein erfindungsgemäßes Verfahren als Flußdiagramm dargestellt. In Verfahrensschritt 16 erkennt das Fahrzeuginnnenraumsensierungssystem 7, in welcher Position sich der Insasse 3 befindet. In Verfahrensschritt 17 wird überprüft, ob der Fahrzeuginsasse sich in der OOP befindet. Ist das nicht der Fall, dann wird zu Verfahrensschritt 16 zurück gesprungen. Wurde jedoch festgestellt, dass sich der Fahrzeuginsasse 3 in der OOP befindet, dann wird in Verfahrensschritt 18 geprüft, ob sich der Fahrzeuginsasse länger als eine vorgegebene Zeit in dieser OOP befindet. Ist das nicht der Fall, wird zu Verfahrensschritt 16 zurück gesprungen. Ist das jedoch der Fall, dann wird zu Verfahrensschritt 19 gesprungen und die Warneinrichtungen 11, 13 und 15 werden aktiviert. Danach wird überprüft, und zwar mit der Fahrzeuginnenraumsensierung 7, ob sich der Fahrzeuginsasse immer noch in der OOP befindet (Verfahrensschritt 20). Ist das der Fall, werden in Verfahrensschritt 19 die Warneinrichtungen 11, 13 und 15 erneut aktiviert. Ist das nicht der Fall, dann wird zu Verfahrensschritt 16 zurück gesprungen. Dieses Ablaufdiagramm wird auf dem Prozessor 8 realisiert.

Wie oben dargestellt, ist es weiterhin möglich, dass auch andere Sitzpositionen, die verletzungsgefährdend sind, zur Ausgabe einer Warnung führen.

## Patentansprüche

1. Vorrichtung zur Insassenwarnung in einem Fahrzeug, wobei die Vorrichtung mit einer Fahrzeuginnenraumsensierung verbindbar ist, wobei die Vorrichtung eine Warneinrichtung (11, 13, 15) für einen Insassen (3) aufweist, die in Abhängigkeit von Signalen von der Fahrzeuginnenraumsensierung (7) eine Warnung ausgibt, **dadurch gekennzeichnet, dass** die Vorrichtung derart konfiguriert ist, dass die Vorrichtung anzeigt, auf welchem Sitz sich der Insasse (3) befindet, der eine verletzungsgefährdende Position eingenommen hat.

2. Vorrichtung nach Anspruch 1, **dadurch gekennzeichnet, dass** die Warneinrichtung (11, 13, 15) eine Anzeige (13) und/oder einen Lautsprecher (11) und/oder haptische Mittel (15) zur Ausgabe der Warnung aufweist.

3. Vorrichtung nach Anspruch 1 oder 2, **dadurch gekennzeichnet, dass** die Warneinrichtung (11, 13, 15) in Abhängigkeit von der Erkennung einer Out-of-Position-Situation (OOP) des Insassen (3) durch die Fahrzeuginnenraumsensierung (7) eine Warnung ausgibt.

4. Vorrichtung nach Anspruch 3, **dadurch gekennzeichnet, dass** die Warneinrichtung (11, 13, 15) eine Warnung ausgibt, sofern die Out - of - Position - Situtation (OOP) des Insassen für eine vorgegebene Zeit ununterbrochen anhält.

5. Vorrichtung nach einem der vorhergehenden Ansprüche, **dadurch gekennzeichnet, dass** die Vorrichtung einen Prozessor (8) aufweist, der Signale von der Fahrzeuginnenraumsensierung (7) auswertet und die Warneinrichtung (11, 13, 15) in Abhängigkeit von der Auswertung ansteuert.

## Claims

1. Device for warning vehicle occupants in a vehicle, wherein the device can be connected to a system for sensing the passenger compartment of a vehicle, wherein the device has a warning apparatus (11, 13, 15) for a vehicle occupant (3), which apparatus outputs a warning as a function of signals of the system (7) for sensing the passenger compartment of a vehicle, **characterized in that** the device is configured in such a way that the device indicates on which seat the vehicle occupant (3) who has assumed the position which entails a risk of injury is located.

2. Device according to Claim 1, **characterized in that** the warning apparatus (11, 13, 15) has a display (13) and/or a loudspeaker (11) and/or haptic means (15) for outputting the warning.

3. Device according to Claim 1 or 2, **characterized in that** the warning apparatus (11, 13, 15) outputs a warning as a function of the sensing of an out-of-position situation (OOP) of the vehicle occupant (3) by the system (7) for sensing the passenger compartment of a vehicle.

4. Device according to Claim 3, **characterized in that** the warning apparatus (11, 13, 15) outputs a warning if the out-of-position situation (OOP) of the vehicle occupant persists uninterruptedly for a predefined time.

5. Device according to one of the preceding claims, **characterized in that** the device has a processor (8) which evaluates signals from the system (7) for sensing the passenger compartment of a vehicle and actuates the warning apparatus (11, 13, 15) as a function of the evaluation.

## Revendications

1. Dispositif pour avertir les occupants d'un véhicule, pouvant être relié à un système de détection de l'habitacle du véhicule, et présentant une installation d'alarme (11, 13, 15) qui, pour un occupant (3), émet un avertissement en fonction de signaux provenant du système de détection de l'habitacle du véhicule (7),
**caractérisé en ce que**
le dispositif est configuré pour indiquer sur quel siège se trouve l'occupant (3) qui a adopté une position présentant un risque de blessure.

2. Dispositif selon la revendication 1,
**caractérisé en ce que**
l'installation d'alarme (11, 13, 15) présente un affichage (13) et/ou un haut-parleur (11) et ou des moyens haptiques (15) pour l'émission de l'avertissement.

3. Dispositif selon la revendication 1 ou 2,
**caractérisé en ce que**
l'installation d'alarme (11, 13, 15) émet un avertissement en fonction de la détection par le système de détection de l'habitacle du véhicule (7) d'une situation « Out-of-Position » (OOP) de l'occupant (3).

4. Dispositif selon la revendication 3,
**caractérisé en ce que**
l'installation d'alarme (11, 13, 15) émet un avertissement lorsque la situation « Out-of-Position » (OOP) de l'occupant se prolonge de façon ininterrompue pendant un temps prédéterminé.

5. Dispositif selon l'une des revendications précédentes,
**caractérisé en ce que**
le dispositif présente un processeur (8) qui exploite des signaux provenant du système de détection de l'habitacle du véhicule (7), et qui commande l'installation d'alarme (11, 13, 15) en fonction de cette exploitation.
